Europäisches Patentamt

European Patent Office

Office européen des brevets

(11) Publication number: **0 081 319**
**B1**

(12) **EUROPEAN PATENT SPECIFICATION**

(45) Date of publication of patent specification: **29.01.86**

(51) Int. Cl.⁴: **B 60 T 11/16**

(21) Application number: **82306273.2**

(22) Date of filing: **25.11.82**

(54) Hydraulic master cylinder.

(30) Priority: **04.12.81 GB 8136695**

(43) Date of publication of application:
**15.06.83 Bulletin 83/24**

(45) Publication of the grant of the patent:
**29.01.86 Bulletin 86/05**

(84) Designated Contracting States:
**DE FR GB**

(56) References cited:
**US-A-2 273 924**
**US-A-3 232 628**

(73) Proprietor: **AUTOMOTIVE PRODUCTS PUBLIC LIMITED COMPANY**
**Tachbrook Road**
**Leamington Spa Warwickshire CV31 3ER (GB)**

(72) Inventor: **Young, Alastair John**
**39 Roundshill**
**Kenilworth Warwickshire (GB)**

(74) Representative: **Farrow, Robert Michael**
**Patent Department Automotive Products plc**
**Tachbrook Road**
**Leamington Spa Warwickshire CV31 3ER (GB)**

Courier Press, Leamington Spa, England.

## Description

This invention relates to hydraulic master cylinders particularly but not exclusively for vehicle hydraulic braking systems.

Hydraulic master cylinders are known of the type comprising a bore, a piston being reciprocable in the bore and dividing said bore into a high pressure chamber for connection to a main hydraulic system and a low pressure chamber, said master cyinder being intended to be installed so that a first end of the piston adjacent to the high pressure chamber is the uppermost end and said high pressure chamber is above the low pressure chamber, the master cylinder further comprising a primary seal adjacent to said first end of the piston for pressurising hydraulic fluid in the high pressure chamber, an atmospheric seal being disposed adjacent to the other end of the piston for sealing the low pressure chamber from atmosphere, an inlet port for connecting the low pressure chamber to a hydraulic reservoir, the bore being stepped so that the primary seal operates in a smaller diameter bore portion and the atmospheric seal operates in a larger diameter bore portion.

The primary seal functions in one direction only such that when operating load is applied to the piston by an input rod, the piston is moved upwardly to pressurise the hydraulic fluid in the high pressure chamber. If the pressure in the high pressure chamber drops below that in the low pressure chamber the primary seal allows hydraulic fluid to flow upwardly from the low pressure chamber to the high pressure chamber. This allows bleeding of the hydraulic system and when used in a braking system having a trap valve, allows the brake pedal to be pumped in an emergency. A problem arises if air should leak past the atmospheric seal into the low pressure chamber. Air bubbles collect at the upper end of the low pressure chamber in the vicinity of the primary seal and may then be swept upwardly past the primary seal into the high pressure chamber and thence into the main hydraulic system. This ċauses sponginess of operation and in a braking system can lead to brake failure.

It is the object of the present invention to alleviate the above problem.

US—A—3 232 628 discloses a master cylinder of the type referred to additionally provided with passageways connecting the smaller diameter bore portion with the larger diameter bore portion. In that US patent an additional seal is provided to seal between the piston and the bore and operate in the larger diameter portion so as to divide the larger diameter portion into a first said low pressure chamber between the primary and additional seals and a second low pressure chamber therebelow between the additional and low pressure seals. The inlet or supply port opens into the second low pressure chamber at a region below the additional seal which can flex radially inwardly to allow passage to the first low pressure chamber of hydraulic fluid from the second should the pressure in the latter substantially exceed that in the first. A compensating port from the reservoir opens into the first low pressure chamber just above the additional seal. This compensating port is of very small diameter and is cut-off from the first low pressure chamber by the additional seal as soon as the piston moves upwardly. The passageways which are formed in the piston open at their lower ends into the first low pressure chamber and open at their upper ends to the underside of a rubber valve member located in the bottom of a well in the upper end of the piston. In its non-pressure generating state the piston is fully lowered so gaps exist between it and the primary seal mounted in an annular groove in the bore. Therefore should air bubbles get past the additional seal they can rise into the high pressure chamber through the gaps.

According to the invention there is provided a master cylinder of the type referred to and provided with passageways connecting the smaller diameter bore portion with the larger diameter bore portion, characterised in that an auxiliary seal operates to seal the piston and the smaller diameter bore portion between the primary and atmospheric seals, in that said inlet port is in the bore between the auxiliary seal and the atmospheric seal in the region of a shoulder between the larger and smaller diameter portions, and in that the passageways connect the smaller diameter bore portion in the region between the primary and auxiliary seals with the larger diameter bore portion in the region between the inlet port and the atmospheric seal.

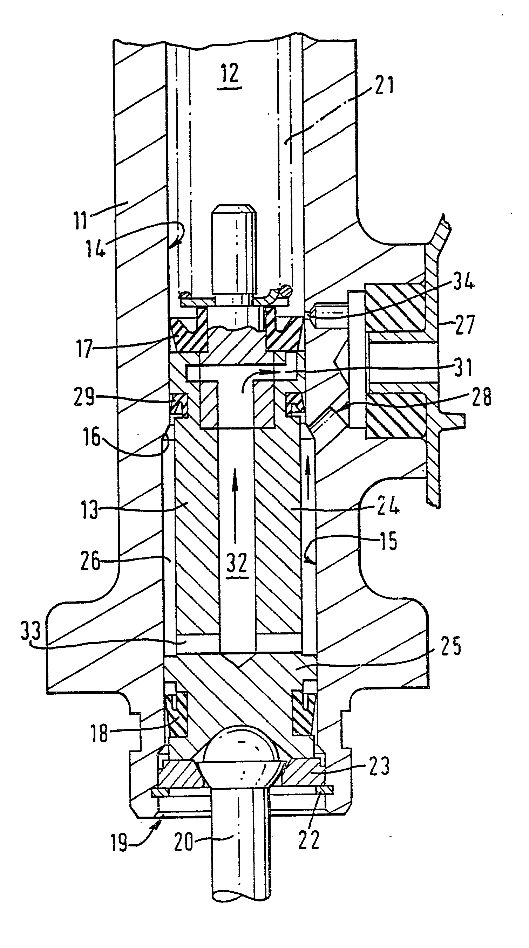

The invention will be described by way of example and with reference to the accompanying drawing in which is illustrated a longitudinal section through part of a master cylinder according to this invention.

The hydraulic master cylinder in the drawing is for the hydraulic braking system of a motor vehicle and is intended to be installed in the vehicle with its bore axis substantially vertical. The master cylinder has a body 11 with a stepped bore comprising a smaller diameter portion 14 and a larger diameter portion 15 with a shoulder therebetween. A stepped piston 13 is reciprocable within the bore and has a primary seal 17 located on a smaller diameter portion 24 slidable in the smaller diameter bore portion 14 and an atmospheric seal 18 located on a larger diameter portion 25 slidable in the larger diameter bore portion 15.

The piston 13 is biassed towards the mouth 19 of the bore by a spring 21 located in the smaller diameter bore portion 14, which forms a high pressure chamber 12. The piston 13 is retained in the bore by a circlip 22 acting against an abutment washer 23 which also serves to retain a driver operable input rod 20. The annular space 26 between the piston 13, the primary and atmospheric seals 17 and 18 and the larger diameter bore portion 15 constitutes a low pressure chamber and is connected to a hydraulic fluid reservoir 27 by an outlet port 28 in the region of the shoulder 16.

An auxiliary seal 29 is located on the smaller diameter portion 24 of the piston to seal against the smaller diameter bore portion 14. Seal 29 is of the annular cup type and is orientated to prevent flow from the low pressure chamber to the bore portion between the primary seal 17 and the auxiliary seal 29 on movement of the piston 13 towards the mouth of the bore. The primary seal 17 is also an annular cup type and is orientated for pressurising hydraulic fluid in the high pressure chamber 12 on movement of the piston 13 into the bore when an operational load is applied at the input rod 20. The back face of the seal 17 (the face away from the high pressure chamber) is supported on the piston 13 and is connected to the low pressure chamber 26 by passageways 31, 32 and 33 through the piston. These passageways thereby connect the smaller diameter bore portion 14 in the region between the primary and auxiliary seals 17 and 29 with the larger diameter bore portion 15.

When the piston 13 is in the "at rest" position shown in the drawing, the high pressure chamber 12 is connected to the fluid reservoir 27 through a cut-off port 34. This allows the pressure in the hydraulic braking system to remain at atmospheric pressure when the master cylinder is not being operated. To effect operation of the brakes a load is applied through the input rod 20 to move the piston 13 into the bore as described above. When the load on the input rod 20 is relieved and the brakes are released the spring 21 moves the piston 13 back towards the mouth 19 of the bore.

After prolonged use, the atmospheric seal 18 may allow a small quantity of air to leak past.

Air that enters the low pressure chamber 26 tends to cling to the wall of the larger diameter bore portion 15, and on operation of the piston 13 to apply the brakes is swept by the piston 13 and the atmospheric seal 18 towards the shoulder 16 and hence out of the bore through the inlet port 28 and into the reservoir. The auxiliary seal 29 prevents air from reaching the region of the bore adjacent to the primary seal 17 and will tend to sweep air that enters the smaller diameter bore portion 14 on the piston pressurising stroke, back to the shoulder 16 on the piston return stroke.

If the capacity of the hydraulic system varies during a brake application, for example by wear of the brakes or from temperature changes, then a partial vacuum may be set up in the high pressure chamber 12 on return movement of the piston 13. The passageways 33, 32 and 31 through the piston 13 and the collapse of the primary seal 17 under the reverse pressure differential then allow the hydraulic brake system to recuperate, i.e. hydraulic fluid will flow into the high pressure chamber 12 from the low pressure 26. This allows pressure bleeding and, when the braking system has a trap valve, allows the master cylinder to be pumped in an emergency or for bleeding purposes. The radial passageway 33 opens into the low pressure chamber 26 adjacent to the atmospheric seal so as to be remote from any accumulation of air bubbles near the shoulder 16.

Although the embodiment of the invention just described the seals 17, 18 and 29 are all carried by the piston 13, the invention is also applicable to master cylinders having some or all of the seals located in the master cylinder body, the piston having co-operating cylinder surfaces which slide through the seals.

## Claims

1. A hydraulic master cylinder comprising a bore, a piston (13) being reciprocable in the bore and dividing said bore into a high pressure chamber (12) for connection to a main hydraulic system and a low pressure chamber (26), said master cylinder being intended to be installed so that a first end of the piston adjacent to the high pressure chamber is the uppermost end and said high pressure chamber is above the low pressure chamber, the master cylinder further comprising a primary seal (17) adjacent to said first end of the piston (13) for pressurising hydraulic fluid in the high pressure chamber (12), an atmospheric seal (18) being disposed adjacent to the other end of the piston for sealing the low pressure chamber (26) from atmosphere, an inlet port (28) for connecting the low pressure chamber to a hydraulic reservoir (27), the bore being stepped so that the primary seal (17) operates in a smaller diameter bore portion (14) and the atmospheric seal (18) operates in a larger diameter bore portion (15), and passageways (31, 32, 33) connecting the smaller diameter bore portion (14) with the larger bore portion (15), characterised in that an auxiliary seal (29) operates to seal the piston (13) and the smaller diameter bore portion (14) between the primary and atmospheric seals (17 and 18), in that said inlet port (28) is in the bore between the auxiliary seal (29) and the atmospheric seal (18) in the region of a shoulder (16) between the larger and smaller diameter portions (15 and 14), and in that the passageways (31, 32, 33) connect the smaller diameter bore portion (14) in the region between the primary and auxiliary seals (17 and 29) with the larger diameter bore portion (15) in the region between the inlet port (28) and the atmospheric seal (18).

2. A master cylinder according the Claim 1, characterised in that the passageways (31, 32, 33) open into the low pressure chamber (26) adjacent to the atmospheric seal (18).

3. A master cylinder according to Claim 1 or Claim 2, when installed with its axis substantially vertical, the high pressure chamber (12) being above the low pressure chamber (26).

4. A vehicle hydraulic braking system, characterised in that a master cylinder according to any preceding claim is installed in said system.

## Patentansprüche

1. Hydrauliksteuerzylinder mit einer Bohrung, einem Kolben (13), der in der Bohrung hin- und herbewegbar ist und die Bohrung in eine Hochdruckkammer (12) zur Verbindung mit einem Haupthydrauliksystem und eine Niederdruckkammer (26) unterteilt, wobei der Steuerzylinder dafür bestimmt ist, so eingebaut zu werden, daß ein erstes Ende des Kolbens, das an die Hochdruckkammer angrenzt, das oberste Ende ist und die Hochdruckkammer über der Niederdruckkammer ist, wobei der Steuerzylinder ferner eine neben dem ersten Ende des Kolbens (13) angeordnete Hauptdichtung (17) zum Unterdrucksetzen von Hydraulikfluid in der Hochdruckkammer (12), eine neben dem anderen Ende des Kolbens angeordnete Umgebungsdichtung (18) zum Abdichten der Niederdruckkammer (26) gegen die Umgebung, eine Einlaßöffnung (28) zum Verbinden der Niederdruckkammer mit einem Hydraulikspeicher (27), wobei die Bohrung abgestuft ist, so daß die Hauptdichtung (17) in einem einen kleineren Durchmesser aufweisenden Bohrabschnitt (14) und die Umgebungsdichtung (18) in einem einen größeren Durchmesser aufweisenden Bohrabschnitt (15) arbeitet, und Kanäle (31, 32, 33) aufweist, die den Bohrabschnitt (14) mit dem kleineren Durchmesser mit dem größeren Bohrabschnitt (15) verbinden, dadurch gekennzeichnet, daß eine Zusatzdichtung (29) den Kolben (13) und den Bohrabschnitt (14) mit dem kleineren Durchmesser zwischen der Haupt- und der Umgebungsdichtung (17 und 18) abdichtet, daß die Einlaßöffnung (28) in der Bohrung zwischen der Zusatzdichtung (29) und der Umgebungsdichtung (18) im Bereich einer Schulter (16) zwischen dem einen größeren Durchmesser aufweisenden Abschnitt (15) und dem einen kleineren Durchmesser aufweisenden Abschnitt (14) ist, und daß die Kanäle (31, 32, 33) den Bohrabschnitt (14) mit dem kleineren Durchmesser im Bereich zwischen der Haupt- und der Zusatzdichtung (17 und 29) mit dem Bohrabschnitt (15) mit dem größeren Durchmesser im Bereich zwischen der Einlaßöffnung (28) und der Umgebungsdichtung (18) verbinden.

2. Steuerzylinder nach Anspruch 1, dadurch gekennzeichnet, daß sich die Kanäle (31, 32, 33) in die Niederdruckkammer (26) neben der Umgebungsdichtung (18) öffnen.

3. Steuerzylinder nach Anspruch 1 oder Anspruch 2, wobei die Hochdruckkammer (12) über der Niederdruckkammer (26) ist, wenn er so eingebaut ist, daß seine Achse im wesentlichen vertikal ist.

4. Hydraulisches Fahrzeugbremssystem, dadurch gekennzeichnet, daß ein Steuerzylinder nach irgendeinem vorhergehenden Anspruch in das System eingebaut ist.

**Revendications**

1. Maître-cylindre hydraulique du type comprenant un alésage, un piston (13) pouvant être déplacé en va-et-vient dans l'alésage et divisant ledit alésage en une chambre haute pression (12) à relier à un système hydraulique principal et une chambre basse pression (26), ledit maître-cylindre étant destiné à être installé de manière telle qu'une première extrémité du piston voisine de la chambre haute pression soit l'extrémité la plus élevée et ladite chambre haute pression soit au-dessus de la chambre basse pression, le maître-cylindre comprenant en outre un joint principal (17) voisin de ladite première extrémité du piston (13) afin de mettre sous pression un fluide hydraulique dans la chambre haute pression (12), un joint atmosphérique (18) disposé au voisinage de l'autre extrémité du piston afin d'assurer l'e-1tanchéité de la chambre basse pression (26) par rapport à l'atmosphère, un orifice d'entrée (28) pour relier la chambre basse pression à un réservoir hydraulique (27), l'alésage étant étagé de manière que le joint principal (17) travaille dans une section d'alésage de plus faible diamètre (14) et le joint atmosphérique (18) travaille dans une section d'alésage de diamètre plus grand (15), et des passages (31, 32, 33) reliant la section d'ale-1sage de plus faible diamètre (14) à la section d'alésage plus grande (15), caractérisé en ce qu'un joint auxiliaire (29) travaille de manière à assurer une étanchéité du piston (13) et de la section d'alésage de plus petit diamètre (14) entre les joints principal et atmosphérique (17 et 18), en ce que ledit orifice d'entrée (28) est situé dans l'alésage entre le joint auxiliaire (29) et le joint atmosphérique (18), dans la zone d'un épaulement (16) situé entre les sections de plus grand et de plus petit diamètres (15 et 14), et en ce que les passages (31, 32, 33) relient la section d'alésage de plus petit diamètre (14), dans la zone située entre les joints principal et auxiliaire (17 et 29), à la section d'alésage de plus grand diamètre (15), dans la zone située entre l'orifice d'entrée (28) et le joint atmosphérique (18).

2. Maître-cylindre selon la revendication 1, caractérisé en ce que les passages (31, 32, 33) s'ouvrent à l'intérieur de la chambre basse pression (26) au voisinage du joint atmosphérique (18).

3. Maître-cylindre selon la revendication 1 ou la revendication 2, lorsqu'il est mis en place avec son axe sensiblement vertical, la chambre haute pression (12) étant située au-dessus de la chambre basse pression (26).

4. Système de freinage hydraulique pour véhicule, caractérisé en ce qu'un maître-cylindre conforme à une revendication précédente quelconque est mis en place dans ledit système.